(19) Europäisches Patentamt
European Patent Office
Office européen des brevets

(11) Veröffentlichungsnummer: **0 315 899 B1**

# (12) EUROPÄISCHE PATENTSCHRIFT

(45) Veröffentlichungstag der Patentschrift: **07.04.93**

(51) Int. Cl.$^5$: **C09B 29/033**, C09B 29/36, D06P 1/18

(21) Anmeldenummer: **88118345.3**

(22) Anmeldetag: **04.11.88**

Die Akte enthält technische Angaben, die nach dem Eingang der Anmeldung eingereicht wurden und die nicht in dieser Patentschrift enthalten sind.

## (54) Thien-3-ylazofarbstoffe.

(30) Priorität: **12.11.87 DE 3738374**

(43) Veröffentlichungstag der Anmeldung:
**17.05.89 Patentblatt 89/20**

(45) Bekanntmachung des Hinweises auf die Patenterteilung:
**07.04.93 Patentblatt 93/14**

(84) Benannte Vertragsstaaten:
**CH DE FR GB IT LI**

(56) Entgegenhaltungen:
**EP-A- 0 198 206**
**FA-A- 2 243 194**
**GB-A- 2 011 937**

(73) Patentinhaber: **BASF Aktiengesellschaft**
**Carl-Bosch-Strasse 38**
**W-6700 Ludwigshafen(DE)**

(72) Erfinder: **Etzbach, Karl-Heinz, Dr.**
**Carl-Bosch-Ring 55**
**W-6710 Frankenthal(DE)**
Erfinder: **Reichelt, Helmut, Dr.**
**Johann-Gottlieb-Fiechte-Strasse 56**
**W-6730 Neustadt(DE)**
Erfinder: **Hansen, Guenter, Dr.**
**Alwin-Mittasch-Platz 8**
**W-6700 Ludwigshafen(DE)**
Erfinder: **Schefczik, Ernst, Dr.**
**Dubliner Strasse 7**
**W-6700 Ludwigshafen(DE)**
Erfinder: **Hagen, Helmut, Dr.**
**Max-Slevogt-Strasse 17e**
**W-6710 Frankenthal(DE)**
Erfinder: **Lamm, Gunther, Dr.**
**Heinrich-Heine-Strasse 7**
**W-6733 Hassloch(DE)**

EP 0 315 899 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Thien-3-ylazofarbstoffe, deren Kupplungskomponente sich von der Pyridin-, Pyridon- oder Pyrazol-Reihe ableitet, sowie die Verwendung dieser Farbstoffe zum Färben von synthetischen Fasermaterialien.

Aus der GB-A-2 011 937, DD-A-157 911 und JP-A-226 556/1985 sind Thien-3-ylazofarbstoffe bekannt. Weiterhin sind in der DE-A-2 441 524 Benzothien-3-ylazofarbstoffe beschrieben, wobei in einem Fall auch 3-Cyano-4-methyl-6-hydroxypyrid-2-on als Kupplungskomponente dient. Es hat sich jedoch gezeigt, daß die bekannten Farbstoffe anwendungstechnische Mängel aufweisen.

Aufgabe der vorliegenden Erfindung war es, neue Azofarbstoffe bereitzustellen, deren Diazokomponente sich von 3-Aminothiophenderivaten ableitet und die ein günstiges anwendungstechnisches Eigenschaftsprofil besitzen.

Es wurden nun neue Thien-3-ylazofarbstoffe der Formel I

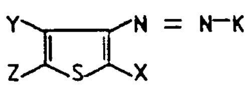

(I)

gefunden, in der

- X Cyano, Nitro, $C_1$-$C_6$-Alkanoyl, gegebenenfalls substituiertes Benzoyl, gegebenenfalls substituiertes Phenyl oder den Rest $COOR^1$ oder $CONR^1R^2$, wobei $R^1$ und $R^2$ gleich oder verschieden sind und unabhängig voneinander jeweils für gegebenenfalls substituiertes $C_1$-$C_8$-Alkyl, $C_5$-$C_7$-Cycloalkyl, $C_3$-$C_4$-Alkenyl, gegebenenfalls substituiertes Phenyl oder zusammen mit dem sie verbindenden Stickstoffatom für einen 5-oder 6-gliedrigen gesättigten heterocyclischen Rest stehen, und $R^2$ zusätzlich auch die Bedeutung von Wasserstoff besitzen kann,
- Y Wasserstoff, Cyano, $C_1$-$C_6$-Alkanoyl, gegebenenfalls substituiertes Benzoyl, $C_1$-$C_4$-Alkylsulfonyl, gegebenenfalls substituiertes Phenylsulfonyl, gegebenenfalls substituiertes Phenyl oder den Rest $COOR^1$ oder $CONR^1R^2$, wobei $R^1$ und $R^2$ jeweils die obengenannte Bedeutung besitzen,
- Z Wasserstoff, gegebenenfalls substituiertes $C_1$-$C_8$-Alkyl, gegebenenfalls substituiertes Phenyl, gegebenenfalls substituiertes $C_1$-$C_6$-Alkylthio, gegebenenfalls substituiertes Phenylthio, gegebenenfalls substituiertes $C_1$-$C_6$-Alkylsulfonyl oder Phenylsulfonyl und
- K den Rest einer Kupplungskomponente der Pyridin-, Pyridon- oder Pyrazol-Reihe bedeuten.

Alle in der obengenannten Formel I auftretenden Alkylgruppen können sowohl geradkettig als auch verzweigt sein.

Für den Fall, daß in der obengenannten Formel I substituierte Phenylreste auftreten, kommen als Substituenten z. B. $C_1$-$C_4$-Alkyl, $C_1$-$C_4$-Alkoxy, Cyano, Fluor, Chlor, Brom oder Nitro in Betracht.

Für den Fall, daß in der obengenannten Formel I substituierte Alkylreste auftreten, kommen als Substituenten, sofern nicht anders vermerkt, z. B. Hydroxy, $C_1$-$C_4$-Alkoxy, Phenoxy, $C_1$-$C_4$-Alkoxycarbonyl, Cyano oder Phenyl in Betracht.

Wenn die Substituenten X und/oder Y den Rest $COOR^1$ oder $CONR^1R^2$ bedeuten, sind einzelne Reste $R^1$ und $R^2$ beispielsweise Wasserstoff (nicht für $R^1$), Methyl, Ethyl, Propyl, Isopropyl, Butyl, Isobutyl, sec-Butyl, Pentyl, Isopentyl, Neopentyl, tert-Pentyl, Hexyl, Isohexyl, Heptyl, Octyl, 2-Ethylhexyl; 2-Hydroxyethyl, 2-Hydroxypropyl, 3-Hydroxypropyl, 4-Hydroxybutyl; 2-Methoxyethyl, 2-Ethoxyethyl, 2-Propoxyethyl, 2-Isopropoxyethyl, 2-Butoxyethyl, 3-Methoxypropyl, 3-Ethoxypropyl, 4-Methoxybutyl, 4-Ethoxybutyl; 2-Phenoxyethyl, 2-Phenoxypropyl, 3-Phenoxypropyl, 4-Phenoxybutyl; 2-Methoxycarbonylethyl, 2-Ethoxycarbonylethyl, 2- oder 3-Methoxycarbonylpropyl, 2- oder 3-Ethoxycarbonylproypl, 2- oder 3-Butoxycarbonylpropyl, 4-Methoxycarbonylbutyl, 4-Ethoxycarbonylbutyl; 2-Cyanoethyl, 2- oder 3-Cyanopropyl, 4-Cyanobutyl; Benzyl, 1- oder 2-Phenylethyl; Cyclopentyl, Cyclohexyl, Cycloheptyl; Phenyl; 2-Methylphenyl, 4-Methlphenyl, 4-Ethylphenyl, 4-Isopropylphenyl, 4-Butylphenyl, 4-(2-Ethylhexyl)phenyl, 2,4-Dimethylphenyl, 2,4,6-Trimethylphenyl; 4-Cyanophenyl; 4-Chlorphenyl, 2,4-Dichlorphenyl, 2-Bromphenyl; 3-Nitrophenyl, 4-Nitrophenyl; Prop-2-en-1-yl, 2-Methylprop-2-en-1-yl, But-2-en-1-yl oder But-3-en-1-yl.

Wenn $R^1$ und $R^2$ zusammen mit dem sie verbindenden Stickstoffatom für einen 5- oder 6-gliedrigen gesättigten heterocyclischen Rest stehen, sind z. B. folgende Reste zu nennen: Pyrrolidino, Piperidino, Morpholino, Piperazino oder N-($C_1$-$C_4$-Alkyl)piperazino, wie N-Methyl- oder N-Ethylpiperazino.

Als weitere Reste X und Y kommen beispielsweise Phenyl, 4-Nitrophenyl, 4-Cyanophenyl, 4-Methylphenyl, 4-Chlorphenyl, 2,4-Dichlorphenyl; Formyl, Acetyl, Propionyl, Butyryl, Isobutyryl, Pentanoyl, Hexanoyl; Benzyol, 2-Methylbenzoyl, 4-Methylbenzoyl, 4-Ethylbenzoyl, 4-Butylbenzoyl, 4-(2-Ethylhexyl)benzoyl, 2,4-Dimethylbenzoyl; 4-Cyanobenzoyl; 4-Chlorbenzoyl, 2-Brombenzoyl 2,4-Dichlorbenzoyl oder 3- oder 4-Nitrobenzoyl in Betracht.

Weitere Reste Y sind beispielsweise Methylsulfonyl, Ethylsulfonyl, Propylsulfonyl, Isoproylsulfonyl, Butylsulfonyl, Isobutylsulfonyl; Phenylsulfonyl; 2-Methylphenylsulfonyl, 4-Methylphenylsulfonyl; 4-Chlorphenylsulfonyl oder 4-Bromphenylsulfonyl.

Reste Z sind beispielsweise Methylthio, Ethylthio, Propylthio, Isopropylthio, Butylthio, Isobutylthio, sec-Butylthio, Pentylthio, Isopentylthio, Neopentylthio, tert-Pentylthio, Hexylthio; 2-Hydroxyethylthio; 2-Methoxyethylthio, 2-Ethoxyethylthio, 3-Methoxypropylthio; 2-Phenoxyethylthio, 2- oder 3-Phenoxypropylthio, Methoxycarbonylmethylthio, Ethoxycarbonylmethylthio, Propoxycarbonylmethylthio, Isopropoxycarbonylmethylthio, Butoxycarbonylmethylthio, Isobutoxycarbonylmethylthio; Cyanomethylthio; Benzylthio; Phenylthio; 2-Methylphenylthio, 4-Methylphenylthio, 4-Chlorphenylthio; Methylsulfonyl, Ethylsulfonyl, Propylsulfonyl, Isopropylsulfonyl, Butylsulfonyl, Isobutylsulfonyl, Pentylsulfonyl, Isopentylsulfonyl, Hexylsulfonyl; 2-Hydroxyethylsulfonyl; 2-Methoxyethylsulfonyl, 2-Ethoxyethylsulfonyl; 2-Phenoxyethylsulfonyl; 2-Methoxycarbonylethylsulfonyl, 2-Ethoxycarbonylethylsulfony; 2-Cyanoethylsulfonyl oder Benzylsulfonyl.

Für den Fall, daß Z für gegebenenfalls substituiertes $C_1$-$C_8$-Alkyl oder gegebenenfalls substituiertes Phenyl steht, sei auf die unter $R^1$ und $R^2$ beispielhaft aufgeführten Reste hingewiesen.

In Formel I bedeutet K den Rest einer Kupplungskomponente KH, die aus der Pyridon-, Pyridin- oder Pyrazol-Reihe stammt. Bevorzugt stammt dabei die Kupplungskomponente KH aus der 2,6-Diaminopyridin-, 6-Hydroxypyrid-2-on- oder 5-Aminopyrazol-Reihe.

Insbesondere entspricht sie der Formel II, III oder IV

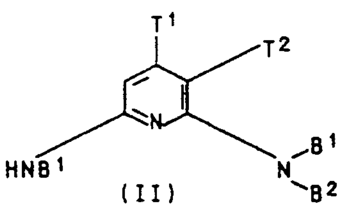
(II)

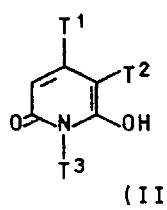
(III)

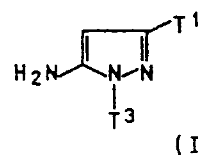
(IV) .

wobei

| | |
|---|---|
| $B^1$ und $B^2$ | gleich oder verschieden sind und jeweils unabhängig voneinander Wasserstoff, substituiertes und/oder durch ein oder zwei Sauerstoffatome unterbrochenes $C_1$-$C_{12}$-Alkyl, $C_5$-$C_7$-Cycloalkyl, gegebenenfalls substituiertes Phenyl, $C_3$-$C_6$-Alkenyl, gegebenenfalls substituiertes Benzoyl, $C_1$-$C_8$-Alkanoyl, $C_1$-$C_6$-Alkylsulfonyl oder Phenylsulfonyl, |
| $T^1$ | Wasserstoff, $C_1$-$C_4$-Alkyl oder Phenyl, |
| $T^2$ | Wasserstoff, Cyano, Nitro, Carbamoyl, $C_1$-$C_4$-Mono- oder Dialkylcarbamoyl, $C_1$-$C_8$-Alkanoyl, $C_1$-$C_6$-Alkoxycarbonyl, dessen Alkylkette gegebenenfalls durch ein oder zwei Sauerstoffatome unterbrochen ist, und |
| $T^3$ | Wasserstoff, gegebenenfalls substituiertes und/oder durch ein oder zwei Sauerstoffatome unterbrochenes $C_1$-$C_{12}$-Alkyl, $C_5$-$C_7$-Cycloalkyl, $C_3$-$C_6$-Alkenyl oder gegebenenfalls substituiertes Phenyl bedeuten. |

Für den Fall, daß die Reste $B^1$, $B^2$ und/oder $T^3$ für substituiertes $C_1$-$C_{12}$-Alkyl, das gegebenenfalls durch ein oder zwei Sauerstoffatome unterbrochen ist, stehen, kommen als Substituenten z. B. Phenyl, Cyano, $C_1$-$C_8$-Alkoxycarbonyl, Phenoxycarbonyl, Halogen, insbesondere Chlor oder Brom, Hydroxy, $C_1$-$C_8$-Alkanoyloxy, Benzoyloxy, $C_5$-$C_7$-Cycloalkoxy, oder Phenoxy in Betracht.

Reste $T^2$ sind z. B. Mono- oder Dimethylcarbamoyl, Mono- oder Diethylcarbamoyl, Mono- oder Dipropylcarbamoyl, Mono- oder Diisopropylcarbamoyl, Mono- oder Dibutylcarbamoyl, Mono- oder Diisobutylcarbamoyl, N-Methyl-N-ethylcarbamoyl, Methoxycarbonyl Ethoxycarbonyl, Propoxycarbonyl, Isopropoxycarbonyl, Butoxycarbonyl, Isobutoxycarbonyl, Pentyloxycarbonyl, Isopentyloxycarbonyl, Hexyloxycarbonyl, 2-Methoxyethoxycarbonyl, 2-Ethoxyethoxycarbonyl, 2-Propoxyethoxycarbonyl, 2- oder 3-Methoxypropoxycarbonyl, 2- oder 3-Ethoxypropoxycarbonyl, 4-Methoxybutoxycarbonyl oder 4-Ethoxybutoxycarbonyl.

Reste $B^1$, $B^2$, $T^1$ und $T^3$ sind z. B. Methyl, Ethyl, Propyl, Isopropyl, Butyl Isobutyl oder sec-Butyl.

Reste $B^1$, $B^2$ und $T^3$ sind weiterhin z. B. Pentyl, Isopentyl, Neopentyl, tert-Pentyl, Hexyl, Heptyl, Octyl, 2-Ethylhexyl, Isooctyl, Nonyl, Isononyl, Decyl, Isodecyl, Undecyl, Dodecyl (Die Bezeichnungen Isooctyl, Isononyl und Isodecyl sind Trivialbezeichnungen und stammen von den nach der Oxosynthese erhaltenen Alkoholen - vgl. Ullmanns Enzyklopädie der technischen Chemie, 4. Auflage, Band 7, Seiten 215 bis 217, sowie Band 11, Seiten 435 und 436.), 2-Methoxyethyl, 2-Ethoxyethyl, 2-Propoxyethyl, 2-Butoxyethyl, 2-(2-Ethylhexyloxy)ethyl, 2-Methoxypropyl, 3-Methoxypropyl, 3-Ethoxypropyl, 3-(2-Ethylhexyloxy)propyl, 2-Methoxybutyl, 4-Methoxybutyl, 2-Ethoxybutyl, 4-Ethoxybutyl, 3,6-Dioxaheptyl, 3,6-Dioxaoctyl, 4,7-Dioxaoctyl, 4,7-Dioxanonyl, 3,6-Dioxadecyl, 4,9-Dioxatridecyl, Benzyl, 1- oder 2-Phenylethyl, 8-Phenyl-4,7-dioxaoctyl, 2-Cyanoethyl, 3-Cyanopropyl, 4-Cyanobutyl, 5-Cyano-3-oxapentyl, 6-Cyano-4-oxahexyl, 8-Cyano-4-oxahexyl, 2-Hydroxyethyl, 2- oder 3-Hydroxypropyl, 2,3-Dihydroxypropyl, 2-Hydroxybutyl, 4-Hydroxybutyl, 5-Hydroxy-3-oxapentyl, 6-Hydroxy-4-oxahexyl, 8-Hydroxy-4-oxaoctyl, 8-Hydroxy-3,6-dioxaoctyl, 2-Phenyl-2-hydroxethyl, 2-Chlorethyl, 2-Bromethyl, 2-Phenoxyethyl, 3-Phenoxypropyl, 4-Phenoxybutyl, 5-Phenoxy-3-oxapentyl, 6-Phenoxy-4-oxahexyl, 8-Phenoxy-4-oxaoctyl, 2-Cyclohexyloxyethyl, 3-Cyclohexyloxypropyl, 4-Cyclohexyloxybutyl, 5-Cyclohexyloxy-3-oxapentyl, 6-Cyclohexyloxy-4-oxahexyl, 8-Cyclohexyloxy-4-oxaoctyl, 2-Methoxycarbonylethyl, 2-Ethoxycarbonylethyl, 3-Methoxycarbonylpropyl, 3-Ethoxycarbonylpropyl, 4-Methoxycarbonylbutyl, 4-Ethoxycarbonylbutyl, 5-Methoxycarbonyl-3-oxapentyl, 6-Methoxycarbonyl-4-oxahexyl, 8-Methoxycarbonyl-4-oxaoctyl, 2-Phenoxycarbonylethyl, 2- oder 3-Phenoxycarbonylpropyl, 4-Phenoxycarbonylbutyl, 5-Phenoxycarbonyl-3-oxapentyl, 6-Phenoxycarbonyl-4-oxahexyl, 8-Phenoxycarbonyl-4-oxaoctyl, 2-Formyloxyethyl, 2-Acetyloxyethyl, 2-Propionyloxyethyl, 2-Butyryloxyethyl, 2-(2-Ethylhexanoyloxy)ethyl, 2- oder 3-Acetyloxypropyl, 2- oder 3-Propionyloxypropyl, 2- oder 3-(2-Ethylhexanoyloxy)propyl, 4-Acetyloxybutyl, 4-Propionyloxybutyl, 4-(2-Ethylhexanoyloxy)butyl, 5-Acetyloxy-3-oxapentyl, 5-Propionyloxy-3-oxapentyl, 5-(2-Ethylhexanoyloxy)-3-oxapentyl, 6-Acetyloxy-4-oxahexyl, 6-Propionyloxy-4-oxahexyl, 6-(2-Ethylhexanoyloxy)-4-oxahexyl, 8-Acetyloxy-4-oxaoctyl, 8-Propionyloxy-4-oxaoctyl, 8-(2-Ethylhexanoyloxy)-4-oxaoctyl, 2-Benzoyloxyethyl, 2- oder 3-Benzoyloxypropyl, 4-Benzoyloxybutyl, 5-Benzoyloxy-3-oxapentyl, 6-Benzoyloxy-4-oxahexyl, 8-Benzoyloxy-4-oxaoctyl, Cyclopentyl, Cyclohexyl, Cycloheptyl, Phenyl, 2-Methylphenyl, 4-Methylphenyl, 2,6-Dimethylphenyl, 4-Isopropylphenyl, 2-Methoxyphenyl, 4-Methoxyphenyl, 2,4-Dimethoxyphenyl, 2-Ethoxyphenyl, 2-Chlorphenyl, 4-Chlorphenyl, 2,4-Dichlorphenyl, 4-Bromphenyl, Allyl oder Methallyl.

Reste $B^1$, $B^2$ und $T^2$ sind weiterhin, beispielsweise Formyl, Acetyl, Propionyl, Butyryl, Isobutyryl, Pentanoyl, Hexanoyl, Heptanoyl, Octanoyl oder 2-Ethylhexanoyl.

Reste $B^1$ und $B^2$ sind weiterhin, beispielsweise Benzoyl, 2-Chlorbenzoyl, 4-Chlorbenzoyl, 4-Brombenzoyl, 4-Methylbenzoyl,4-Methoxybenzoyl, Methylsulfonyl, Ethylsulfonyl, Propylsulfonyl, Isopropylsulfonyl, Butylsulfonyl, Pentylsulfonyl oder Hexylsulfonyl.

Bevorzugt sind Thien-3-ylazofarbstoffe der Formel I, in der

- X Cyano, Nitro, $C_1$-$C_2$-Alkanoyl, Benzoyl oder den Rest $COOR^1$, wobei $R^1$ die obengenannte Bedeutung besitzt,
- Y Wasserstoff, Cyano, $C_1$-$C_4$-Alkanoyl, Phenyl oder den Rest $COOR^1$, wobei $R^1$ die obengenannte Bedeutung besitzt,
- Z $C_1$-$C_4$-Alkyl, Benzyl, Phenyl, $C_1$-$C_4$-Alkylthio, Phenylthio oder $C_1$-$C_4$-Alkylsulfonyl, das jeweils gegebenenfalls durch Cyano, $C_1$-$C_4$-Alkoxycarbonyl, Methoxy, Chlor oder Brom substituiert ist, oder Phenylsulfonyl und
- K den Rest einer Kupplungskomponente der 2,6-Diaminopyridin-, 6-Hydroxypyrid-2-on- oder 5-Aminopyrazol-Reihe bedeuten.

Besonders bevorzugt sind Thien-3-ylazofarbstoffe der Formel I, in der

- X Cyano, $C_1$-$C_4$-Alkanoyl oder den Rest $COOR^1$, in dem $R^1$ für $C_1$-$C_4$-Alkyl oder Phenyl steht,
- Y Wasserstoff, Cyano, $C_1$-$C_4$-Alkanoyl, Phenyl oder den Rest $COOR^1$, in dem $R^1$ für $C_1$-$C_4$-Alkyl oder Phenyl steht,
- Z $C_1$-$C_4$-Alkyl, $C_1$-$C_4$-Alkylthio oder $C_1$-$C_4$-Alkylsulfonyl, das jeweils gegebenenfalls durch Cyano, $C_1$-$C_4$-Alkoxycarbonyl, Methoxy, Chlor oder Brom substituiert ist, Benzyl, Phenyl, Phenylthio, oder Phenylsulfonyl und
- K den Rest einer Kupplungskomponente der 2,6-Diaminopyridin-, 6-Hydroxypyrid-2-on- oder 5-Aminopyrazol-Reihe bedeuten.

Insbesondere sind Thien-3-ylazofarbstoffe der Formel V, VI oder VII

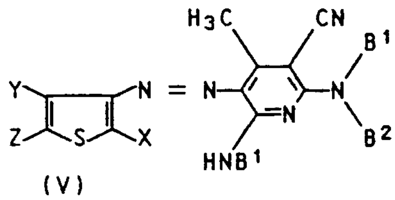

(V)

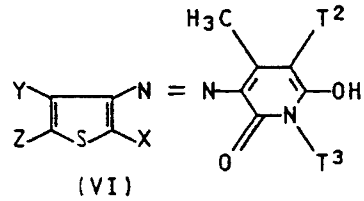

(VI)

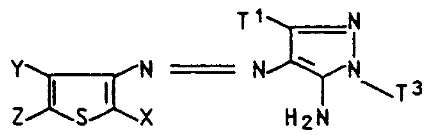

(VII)

zu nennen, wobei

X Cyano, $C_1$-$C_4$-Alkanoyl oder den Rest $COOR^1$, in dem $R^1$ für $C_1$-$C_4$-Alkyl oder Phenyl steht,

Y Wasserstoff, Cyano, $C_1$-$C_4$-Alkanoyl, Phenyl oder den Rest $COOR^1$, in dem $R^1$ für $C_1$-$C_4$-Alkyl oder Phenyl steht,

Z $C_1$-$C_4$-Alkyl oder $C_1$-$C_4$-Alkylthio, das jeweils gegebenenfalls durch Cyano, $C_1$-$C_4$-Alkoxycarbonyl, Methoxy, Chlor oder Brom substituiert ist, Benzyl, Phenyl, Phenylthio, $C_1$-$C_4$-Alkylsulfonyl oder Phenylsulfonyl und

$T^2$ Wasserstoff, Cyano, Carbamoyl oder $C_1$-$C_4$-Alkoxycarbonyl bedeuten und

$B^1$, $B^2$, $T^1$ und $T^3$ jeweils die obengenannte Bedeutung besitzen.

Technisch besonders wertvoll sind Thien-3-ylazofarbstoffe der Formel V, VI oder VII, wobei

X Cyano oder den Rest $COOR^1$, in dem $R^1$ für $C_1$-$C_4$-Alkyl steht,

Y Cyano, Phenyl oder den Rest $COOR^1$, in dem $R^1$ für $C_1$-$C_4$-Alkyl steht,

Z Phenyl oder gegebenenfalls durch Cyano oder $C_1$-$C_4$-Alkoxycarbonyl substituiertes $C_1$-$C_4$-Alkyl,

$T^1$ Wasserstoff, Methyl oder Phenyl und

$T^2$ Wasserstoff, Cyano oder $C_1$-$C_4$-Alkoxycarbonyl bedeuten und

$B^1$, $B^2$ und $T^3$ jeweils die obengenannte Bedeutung besitzen.

Zur Herstellung der erfindungsgemäßen Thien-3-ylazofarbstoffe der Formel I kann man eine nach an sich bekannten Verfahren erhältliche Diazoniumverbindung von Aminen der Formel VIII

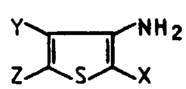

(VIII),

in der X, Y und Z jeweils die obengenannte Bedeutung besitzen, mit einer Kupplungskomponenten HK, wie sie oben beschrieben ist, nach an sich bekannten Methoden umnsetzen.

Weitere Einzelheiten der Herstellung können den Beispielen entnommen werden.

3-Aminothiophene der Formel VIII sind bekannt und beispielsweise in Liebigs Ann. Chem. Band 656, S. 90 (1962); Pharm. Zentralhalle Band 107, S. 348 (1968); GB-A-2 011 937 oder Synthesis 1982, S. 1056, beschrieben. Weitere Informationen über Synthesemöglichkeiten für 3-Aminothiophene sind in Heterocyclic Compounds, Vol. 44, John Wiley & Sons, Inc, 1986, "Thiophene and its Derivatives", Part 1 und 2, beschrieben.

Die erfindungsgemäßen Farbstoffe sind gelb bis rot und zeichnen sich durch gute Lichtechtheit, Thermofixierechtheit, sowie durch gutes Ziehvermögen aus. Sie eignen sich zum Färben von synthetischen Fasermaterialien, wie Polyamide, Celluloseester oder Mischgewebe aus Polyestern und Cellulosefasern. Insbesondere sind sie zum Färben von synthetischen Polyestern geeignet.

Die folgenden Beispiele sollen die Erfindung näher erläutern. In den Beispielen beziehen sich Angaben über Prozente, sofern nicht anders vermerkt, auf das Gewicht.

Beispiel 1

4,9 g 3-Amino-4-cyano-2-methoxycarbonyl-5-methylthiophen wurden in 37,5 ml Eisessig/Propionsäure (17 : 3) eingetragen. Bei 10 - 20 °C wurden 10 ml 85 %ige Schwefelsäure und bei 0 - 5 °C 4,3 ml Nitrosylschwefelsäure (11,5 % $N_2O_3$) zugetropft und 4 Stunden bei 0 - 5 °C gerührt.

Zu 6,6 g 2,6-Bis(2-methoxyethylamino)-3-cyano-4-methylpyridin, gelöst in 20 ml N,N-Dimethylformamid, 20 ml verdünnter Salzsäure, 100 g Eis und 0,5 g Amidosulfonsäure, wurde die oben hergestellte Diazoniumsalzlösung bei 0 °C getropft. Es wurde 4 Stunden bei 0 -5 °C gerührt, langsam auf Raumtemperatur erwärmt, abgesaugt und der Niederschlag gewaschen und getrocknet.

Ausbeute: 10,5 g des Farbstoffs der Formel

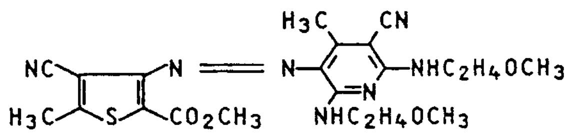

der Polyestermaterial in echten orangen Tönen färbt. $\lambda_{max}(CH_2Cl_2)$: 485 nm.

Beispiel 2

Zu 5,85 g 3-Cyano-6-hydroxy-1-hexyl-4-methylpyrid-2-on, gelöst in 20 ml N,N-Dimethylformamid, 20 ml verdünnter Salzsäure, 100 g Eis und 0,5 g Amidosulfonsäure, wurde die in Beispiel 1 hergestellte Diazoniumsalzlösung bei 0 - 3 °C unter Rühren zugetropft. Nach 4 Stunden bei 0 - 5 °C und Erwärmen auf Raumtemperatur wurde der Niederschlag abgesaugt, gewaschen und getrocknet. Man erhielt 10,3 g des Farbstoffs der Formel

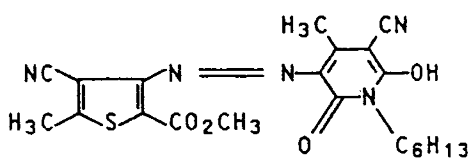

der Polyesterfasermaterial in echten Tönen gelb färbt. $\lambda_{max}(CH_2Cl_2)$: 431 nm.

Beispiel 3

4,9 g 3-Amino-2,4-dicyano-5-methylthiothiophen wurden in 50 ml Eisessig/Propionsäure (3 : 1) angerührt. Bei 0 - 5 °C wurden 8,2 g Nitrosylschwefelsäure (11,5 % $N_2O_3$) zugetropft und die Mischung 3 Stunden bei 0 - 5 °C gerührt.

Zu 7,7 g 2,6-Bis(3-methoxypropylamino)-3-cyano-4-methylpyridin, gelöst in 100 ml N,N-Dimethylformamid, 0,5 g Amidosulfonsäure und 100 g Eis, wurde diese Diazoniumsalzlösung innerhalb 20 Minuten bei 0 - 5 °C zugetropft. Man ließ 4 Stunden bei 0 - 5 °C und 8 Stunden bei Raumtemperatur rühren. Der entstandene Farbstoff wurde abgesaugt, gewaschen und getrocknet. Ausbeute: 6,2 g des Farbstoffs der Formel

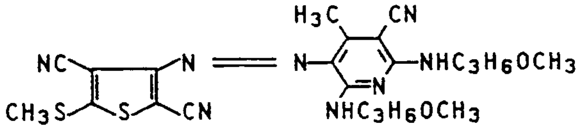

der Polyestermaterial in echten, orangen Tönen färbt. $\lambda_{max}(CH_2Cl_2)$: 491 nm.

In analoger Weise werden die in den folgenden Tabellen 1 bis 4 aufgeführten Farbstoffe erhalten.

Tabelle 1

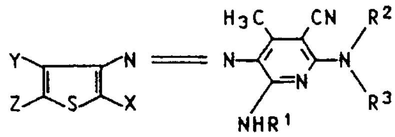

| Bsp. | X | Y | Z | $R^1$ | $R^2$ | $R^3$ | Farbton auf PES |
|---|---|---|---|---|---|---|---|
| 4 | $CO_2CH_3$ | CN | $CH_3$ | H | $C_3H_6OC_4H_8OCOCH_3$ | H | orange |
| 5 | $CO_2CH_3$ | CN | $CH_3$ | $C_2H_5$ | $C_3H_6OC_4H_8OCOCH_3$ | H | orange |
| 6 | $CO_2CH_3$ | CN | $CH_3$ | H | $C_3H_6OC_2H_4OCOCH_3$ | H | orange |
| 7 | $CO_2C_2H_5$ | CN | $CH_3$ | H | 1) | H | orange |
| 8 | $CO_2C_2H_5$ | CN | $CH_3$ | H | $C_3H_6OC_4H_8OCOC_2H_5$ | H | orange |
| 9 | $CO_2C_2H_5$ | CN | $CH_3$ | H | 2) | H | orange |
| 10 | $CO_2CH_3$ | CN | $C_2H_5$ | H | $C_3H_6OC_4H_8OCOCH_3$ | H | orange |
| 11 | CN | CN | $CH_3$ | H | 2) | H | orange |
| 12 | CN | CN | $CH_3$ | H | $C_3H_6OC_2H_4OCH_3$ | H | orange |
| 13 | $COCH_3$ | CN | $CH_3$ | H | $C_3H_6OC_2H_4OC_2H_5$ | H | orange |
| 14 | $COC_6H_5$ | CN | $CH_3$ | H | $C_3H_6OC_2H_4OC_4H_9$ | H | orange |
| 15 | $CO_2C_2H_5$ | CN | $CH_3$ | H | $C_3H_6OC_4H_8OC_2H_5$ | H | orange |
| 16 | $CO_2C_2H_5$ | $CO_2C_2H_5$ | $CH_3$ | H | $C_3H_6OC_4H_8OC_4H_9$ | H | orange |
| 17 | $CO_2CH_3$ | $CO_2CH_3$ | $CH_3$ | H | $C_3H_6OC_2H_4OC_4H_9$ | H | orange |
| 18 | $CO_2CH_3$ | $CO_2CH_3$ | $C_2H_5$ | H | $C_3H_6OC_2H_4OCH_3$ | H | orange |
| 19 | $COCH_3$ | CN | $CH_3$ | H | $C_3H_6OC_4H_8OCOCH_3$ | H | orange |
| 20 | $CO_2CH_3$ | CN | $CH_3$ | $C_2H_4OCH_3$ | $C_3H_6OC_4H_8OH$ | H | orange |
| 21 | CN | CN | $CH_3$ | $C_2H_4OCH_3$ | $C_3H_6OC_4H_8OCOCH_3$ | H | orange |
| 22 | $CO_2C_2H_5$ | CN | $CH_3$ | $C_2H_4OCOCH_3$ | $C_3H_6OC_2H_4OC_2H_5$ | H | orange |
| 23 | $CO_2C_2H_5$ | CN | $CH_3$ | $C_2H_4OH$ | $C_3H_6OC_2H_4OC_2H_5$ | H | orange |
| 24 | $CO_2CH_3$ | CN | $C_6H_5$ | $C_2H_4OCOCH_3$ | $C_2H_4OC_2H_5$ | H | orange |
| 25 | $CO_2CH_3$ | CN | $CH_3$ | $C_3H_6OCH_3$ | $C_3H_6OC_2H_4OC_4H_9$ | H | orange |
| 26 | $CO_2CH_3$ | CN | $CH_3$ | $C_3H_6OCH_3$ | $C_3H_6OC_4H_8OH$ | H | orange |
| 27 | $CO_2CH_3$ | H | $CH_3$ | $C_3H_6OCH_3$ | $C_3H_6OC_4H_8OH$ | H | orange |
| 28 | $CO_2CH_3$ | H | $CH_3$ | H | $C_3H_6OC_2H_4OCH_3$ | H | orange |
| 29 | $CO_2CH_3$ | CN | $CH_3$ | $C_3H_6OCOCH_3$ | 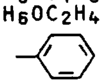 | H | gelbstichig rot |
| 30 | $CO_2CH_3$ | CN | $CH_3$ | 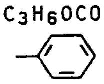 | $C_3H_6OCOCH_3$ | H | gelbstichig rot |
| 31 | CN | CN | $CH_3$ | 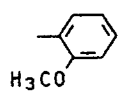 | $C_3H_6OCOCH_3$ | H | rot |
| 32 | $CO_2CH_3$ | CN | $CH_3$ | $C_3H_6OC_4H_8OH$ | 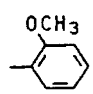 | H | orange |
| 33 | $CO_2C_2H_5$ | CN | $CH_3$ | $C_3H_6OH$ | 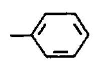 | H | gelbstichig rot |
| 34 | $CO_2C_2H_5$ | CN | $CH_3$ | $C_3H_6OH$ | 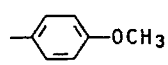 | H | rot |
| 35 | $CO_2C_2H_5$ | CN | $CH_3$ | $C_3H_6OC_2H_4OCH_3$ | 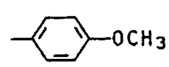 | H | rot |
| 36 | $CO_2CH_3$ | $CO_2CH_3$ | $C_2H_5$ | $C_3H_6OCH_3$ | $C_3H_6OCH_3$ | H | orange |
| 37 | $CO_2C_2H_5$ | CN | $C_4H_9$ | $C_2H_4OCH_3$ | $C_2H_4OCH_3$ | H | orange |
| 38 | $COCH_3$ | CN | $CH_3$ | $C_2H_5$ | $C_3H_6OC_4H_8OCOC_2H_5$ | H | orange |
| 39 | $COC_6H_5$ | CN | $CH_3$ | $C_2H_5$ | $C_3H_6OC_2H_4OC_4H_9$ | H | orange |
| 40 | $CO_2CH_3$ | CN | $CH_3$ | $C_2H_5$ | $C_3H_6OC_2H_4OH$ | H | orange |
| 41 | $CO_2CH_3$ | H | $CH_3$ | $C_3H_6OH$ | 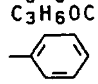 | H | gelbstichig rot |
| 42 | $CO_2C_2H_5$ | CN | $CH_3$ | $C_3H_6OCOCH_3$ | 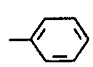 | H | gelbstichig rot |

1) $C_3H_6OC_2H_4O-$ 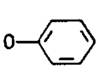

2) $C_3H_6OC_4H_8OCOCH_2CH(CH_3)_2$

Tabelle 1 (Fortsetzung)

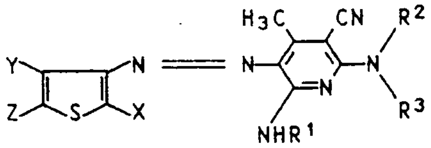

| Bsp. | X | Y | Z | $R^1$ | $R^2$ | $R^3$ | Farbton auf PES |
|---|---|---|---|---|---|---|---|
| 43 | $CO_2CH_3$ | CN | $CH_3$ | H | $C_3H_6OC_4H_8OC_4H_9$ | H | orange |
| 44 | $COCH_3$ | CN | $CH_3$ | $C_3H_6OCH_3$ | $C_3H_6OCH_3$ | H | orange |
| 45 | $CO_2C_2H_5$ | CN | $CH_3$ | $C_3H_6OCH_3$ | $C_3H_6OC_4H_8OC_4H_9$ | H | orange |
| 46 | CN | CN | $CH_3$ | H | $C_3H_6OC_2H_4O-$ 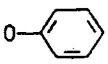 | H | orange |
| 47 | CN | CN | $CH_3$ | H | $C_2H_5$<br>\|<br>$C_3H_6OCH_2-CH-C_4H_9$ | H | orange |
| 48 | $CO_2CH_3$ | CN | $CH_3$ | H | 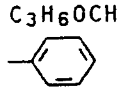 | H | orange |
| 49 | $CO_2CH_3$ | CN | $CH_3$ | H | 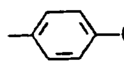 $-OCH_3$ | H | orange-rot |
| 50 | $CO_2CH_3$ | CN | $CH_3$ | H | $C_3H_6OC_4H_8OCOC_2H_5$ | H | orange |
| 51 | $CO_2CH_3$ | CN | $CH_3$ | $C_2H_4OCH_3$ | $C_2H_4OCH_3$ | $CH_3$ | orange-rot |
| 52 | $CO_2CH_3$ | CN | $CH_3$ | $C_3H_6OCH_3$ | $C_2H_5$ | $C_2H_5$ | orange-rot |
| 53 | CN | CN | $SCH_3$ | H | $C_3H_6OC_4H_8OCOCH_3$ | H | orange |
| 54 | CN | CN | $SCH_3$ | $C_2H_4OCH_3$ | $C_3H_6OC_4H_8OH$ | H | orange |
| 55 | CN | CN | $SCH_3$ | $C_2H_4OCH_3$ | $C_2H_4OCH_3$ | H | orange |
| 56 | CN | CN | $SCH_3$ | H | $C_3H_6OC_4H_8OC_2H_5$ | H | orange |
| 57 | $CO_2CH_3$ | CN | 3) | H | $C_3H_6OC_4H_8C_2H_5$ | H | orange |
| 58 | $CO_2CH_3$ | CN | 3) | $C_2H_4OCH_3$ | $C_2H_4OCH_3$ | H | orange |
| 59 | $CO_2CH_3$ | $C_6H_5$ | 3) | H | $C_3H_6OC_2H_4OCH_3$ | H | orange |
| 60 | $NO_2$ | CN | $SCH_3$ | $C_2H_4OCH_3$ | $C_2H_4OCH_3$ | H | orange-rot |
| 61 | CN | CN | $SO_2CH_3$ | $C_2H_4OCH_3$ | $C_2H_4OCH_3$ | H | orange |
| 62 | $CO_2CH_3$ | CN | $SCH_3$ | H | $C_3H_4OC_4H_8OC_2H_5$ | H | orange |
| 63 | $CO_2CH_3$ | CN | $SCH_3$ | $C_2H_4OH$ | $C_3H_6OC_4H_8OH$ | H | orange |

Tabelle 2

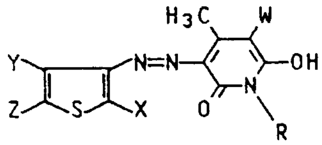

| Bsp. | X | Y | Z | R | W | Farbton auf PES |
|---|---|---|---|---|---|---|
| 64 | $CO_2CH_3$ | CN | $CH_3$ | $CH_3$ | CN | gelb |
| 65 | $CO_2CH_3$ | CN | $CH_3$ | $C_4H_9$ | CN | gelb |
| 66 | $CO_2CH_3$ | CN | $CH_3$ | $C_3H_6OCH_2$— 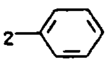 | CN | gelb |
| 67 | $CO_2CH_3$ | CN | $CH_3$ | $C_3H_6OC_2H_4OC_6H_5$ | CN | gelb |
| 68 | CN | CN | $CH_3$ | $C_6H_{13}$ | CN | gelb |
| 69 | CN | CN | $CH_3$ | $C_3H_6O$— 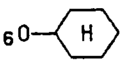 | CN | gelb |
| 70 | CN | CN | $CH_3$ | $C_3H_7$ | CN | gelb |

3) $SCH_2CO_2CH_3$

Tabelle 2 (Fortsetzung)

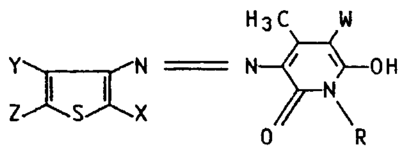

| Bsp. | X | Y | Z | R | W | Farbton auf PES |
|---|---|---|---|---|---|---|
| 71 | $COCH_3$ | CN | $CH_3$ | $CH_2CH(C_2H_5)C_4H_9$ | CN | gelb |
| 72 | $COCH_3$ | CN | $CH_3$ | $CH_3$ | CN | gelb |
| 73 | $COCH_3$ | CN | $CH_3$ | $C_3H_6OCH_2$— 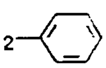 | CN | gelb |
| 74 | $COC_6H_5$ | CN | $CH_3$ | $C_3H_6OCH_2$— 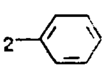 | CN | gelb |
| 75 | $COC_6H_5$ | CN | $CH_3$ | $C_4H_9$ | CN | |
| 76 | $CO_2C_2H_5$ | CN | $CH_3$ | $CH_3$ | CN | gelb |
| 77 | $CO_2C_2H_5$ | $CO_2C_2H_5$ | $CH_3$ | $CH_3$ | CN | gelb |
| 78 | $CO_2CH_3$ | H | $CH_3$ | $C_4H_9$ | CN | gelb |
| 79 | $CO_2CH_3$ | $CO_2CH_3$ | $CH_3$ | $C_3H_6O$— 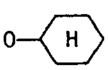 | CN | gelb |
| 80 | $CO_2CH_3$ | CN | $CH_3$ | $CH_3$ | $CONH_2$ | gelb |
| 81 | $CO_2CH_3$ | CN | $CH_3$ | $CH_2CH(C_2H_5)C_4H_9$ | $CONH_2$ | gelb |
| 82 | $CO_2CH_3$ | CN | $CH_3$ | $C_3H_{78}$ | $CONHC_3H_7$ | gelb |
| 83 | $CO_2CH_3$ | CN | $CH_3$ | $C_3H_6OC_2H_9OC_6H_5$ | H | gelb |
| 84 | $CO_2CH_3$ | CN | $CH_3$ | $C_4H_9$ | $CO_2C_2H_5$ | gelb |
| 85 | $CO_2C_2H_5$ | CN | $CH_3$ | $C_6H_{13}$ | $CONH_2$ | gelb |
| 86 | CN | CN | $CH_3$ | $C_6H_{13}$ | $CONH_2$ | gelb |
| 87 | CN | CN | $SCH_3$ | $CH_3$ | CN | gelb |
| 88 | CN | CN | $SCH_3$ | $C_3H_6OCH_2C_6H_5$ | CN | gelb |
| 89 | CN | CN | $SCH_3$ | $C_4H_9$ | CN | gelb |
| 90 | $CO_2CH_3$ | CN | $SCH_2CO_2CH_3$ | $C_4H_9$ | CN | gelb |
| 91 | $CO_2CH_3$ | $C_6H_5$ | $SCH_2CO_2CH_3$ | $C_4H_9$ | CN | gelb |
| 92 | $CO_2CH_3$ | CN | $SCH_3$ | $C_3H_6OC_2H_4OC_6H_5$ | CN | gelb |

Tabelle 3

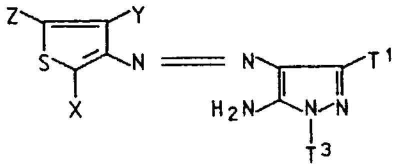

| Bsp. | X | Y | Z | $T^1$ | $T^3$ | Farbton auf PES |
|---|---|---|---|---|---|---|
| 93 | $CO_2CH_3$ | CN | $CH_3$ | H | $CH_2C_6H_5$ | gelb |
| 94 | $CO_2CH_3$ | CN | $CH_3$ | H | $C_6H_5$ | gelb |
| 95 | $CO_2CH_3$ | CN | $CH_3$ | H | 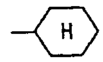 | gelb |
| 96 | $CO_2CH_3$ | CN | $CH_3$ | $CH_3$ | $C_6H_5$ | gelb |
| 97 | $CO_2C_2H_5$ | CN | $CH_3$ | H | $CH_2C_6H_5$ | gelb |
| 98 | $CO_2C_2H_5$ | CN | $CH_3$ | H | $CH_3$ | gelb |
| 99 | $COCH_3$ | CN | $CH_3$ | H | $C_6H_5$ | gelb |
| 100 | CN | CN | $CH_3$ | H | 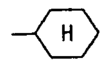 | gelb |
| 101 | $CO_2CH_3$ | $CO_2CH_3$ | $CH_3$ | H | $CH_2C_6H_5$ | gelb |
| 102 | $CO_2CH_3$ | $CO_2CH_3$ | $C_2H_5$ | H | $CH_2C_6H_5$ | gelb |
| 103 | $CO_2CH_3$ | H | $CH_3$ | H | $C_6H_5$ | gelb |
| 104 | $COC_6H_5$ | CN | $CH_3$ | H | 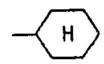 | gelb |

Tabelle 3 (Fortsetzung)

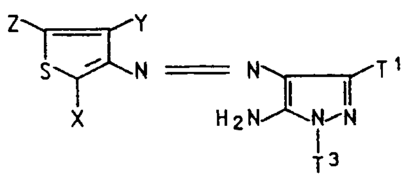

| Bsp. | X | Y | Z | $T^1$ | $T^3$ | Farbton auf PES |
|---|---|---|---|---|---|---|
| 105 | CN | CN | $SCH_3$ | H | 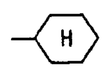 | gelb |
| 106 | CN | CN | $SCH_3$ | H | $CH_2C_6H_5$ | gelb |
| 107 | $CO_2CH_3$ | CN | $SCH_2CO_2CH_3$ | H | $CH_2C_6H_5$ | gelb |
| 108 | $CO_2CH_3$ | CN | $SCH_3$ | H | $C_6H_5$ | gelb |
| 109 | $CO_2CH_3$ | $C_6H_5$ | $SCH_2CO_2CH_3$ | H | 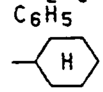 | gelb |

## Patentansprüche

**1.** Thien-3-ylazofarbstoffe der Formel I

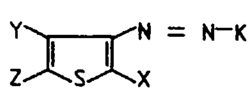

(I),

in der

X Cyano, Nitro, $C_1$-$C_6$-Alkanoyl, gegebenenfalls substituiertes Benzoyl, gegebenenfalls substituiertes Phenyl oder den Rest $COOR^1$ oder $CONR^1R^2$, wobei $R^1$ und $R^2$ gleich oder verschieden sind und unabhängig voneinander jeweils für gegebenenfalls substituiertes $C_1$-$C_8$-Alkyl, $C_5$-$C_7$-Cycloalkyl, $C_3$-$C_4$-Alkenyl, gegebenenfalls substituiertes Phenyl oder zusammen mit dem sie verbindenden Stickstoffatom für einen 5- oder 6-gliedrigen gesättigten heterocyclischen Rest stehen, und $R^2$ zusätzlich auch die Bedeutung von Wasserstoff besitzen kann,

Y Wasserstoff, Cyano, $C_1$-$C_6$-Alkanoyl, gegebenenfalls substituiertes Benzoyl, $C_1$-$C_4$-Alkylsulfonyl, gegebenenfalls substituiertes Phenylsulfonyl, gegebenenfalls substituiertes Phenyl oder den Rest $COOR^1$ oder $CONR^1R^2$, wobei $R^1$ und $R^2$ jeweils die obengenannte Bedeutung besitzen,

Z Wasserstoff, gegebenenfalls substituiertes $C_1$-$C_8$-Alkyl, gegebenenfalls substituiertes Phenyl, gegebenenfalls substituiertes $C_1$-$C_6$-Alkylthio, gegebenenfalls substituiertes Phenylthio, gegebenenfalls substituiertes $C_1$-$C_6$-Alkylsulfonyl oder Phenylsulfonyl und

K den Rest einer Kupplungskomponente der Pyridin-, Pyridon- oder Pyrazol-Reihe bedeuten.

**2.** Thien-3-ylazofarbstoffe gemäß Anspruch 1, dadurch gekennzeichnet, daß

X Cyano, Nitro, $C_1$-$C_2$-Alkanoyl, Benzoyl oder den Rest $COOR^1$, wobei $R^1$ die in Anspruch 1 genannte Bedeutung besitzt,

Y Wasserstoff, Cyano, $C_1$-$C_4$-Alkanoyl, Phenyl oder den Rest $COOR^1$, wobei $R^1$ die in Anspruch 1 genannte Bedeutung besitzt,

Z $C_1$-$C_4$-Alkyl, Benzyl, Phenyl, $C_1$-$C_4$-Alkylthio, Phenylthio oder $C_1$-$C_4$-Alkylsulfonyl, das jeweils gegebenenfalls durch Cyano, $C_1$-$C_4$-Alkoxycarbonyl, Methoxy, Chlor oder Brom substituiert ist, oder Phenylsulfonyl und

K den Rest einer Kupplungskomponente der 2,6-Diaminopyridin-, 6-Hydroxypyrid-2-on- oder 5-Aminopyrazol-Reihe bedeuten.

**3.** Thien-3-ylazofarbstoffe gemäß Anspruch 1, dadurch gekennzeichnet, daß

X Cyano, $C_1$-$C_4$-Alkanoyl oder den Rest $COOR^1$, in dem $R^1$ für $C_1$-$C_4$-Alkyl oder Phenyl steht,

Y Wasserstoff, Cyano, $C_1$-$C_4$-Alkanoyl, Phenyl oder den Rest $COOR^1$, in dem $R^1$ für $C_1$-$C_4$-Alkyl oder Phenyl steht,

Z $C_1$-$C_4$-Alkyl, $C_1$-$C_4$-Alkylthio oder $C_1$-$C_4$-Alkylsulfonyl, das jeweils gegebenenfalls durch Cyano, $C_1$-$C_4$-Alkoxycarbonyl, Methoxy, Chlor oder Brom substituiert ist, Benzyl, Phenyl, Phenylthio, oder Phenylsulfonyl und

K den Rest eine Kupplungskomponente der 2,6-Diaminopyridin-, 6-Hydroxypyrid-2-on- oder 5-Aminopyrazolreihe bedeuten.

**4.** Verwendung der Thien-3-ylazofarbstoffe gemäß Anspruch 1 zum Färben von synthetischen Fasermaterialien.

## Claims

**1.** A thien-3-ylazo dye of the formula I

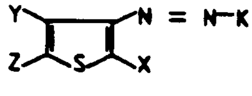

(I)

where

X is cyano, nitro, $C_1$-$C_6$-alkanoyl, substituted or unsubstituted benzoyl, substituted or unsubstituted phenyl or the radical $COOR^1$ or $CONR^1R^2$ where $R^1$ and $R^2$ are identical or different and each is independently of each other substituted or unsubstituted $C_1$-$C_8$-alkyl, $C_5$-$C_7$-cycloalkyl, $C_3$-$C_4$-alkenyl, substituted or unsubstituted phenyl or together with the nitrogen atom linking them a 5- or 6-membered saturated heterocyclic radical, and $R^2$ may additionally be hydrogen,

Y is hydrogen, cyano, $C_1$-$C_6$-alkanoyl, substituted or unsubstituted benzoyl, $C_1$-$C_4$-alkylsulfonyl, substituted or unsubstituted phenylsulfonyl, substituted or unsubstituted phenyl or the radical $COOR^1$ or $CONR^1R^2$ where $R^1$ and $R^2$ are each as defined above,

Z is hydrogen, substituted or unsubstituted $C_1$-$C_8$-alkyl, substituted or unsubstituted phenyl, substituted or unsubstituted $C_1$-$C_6$-alkylthio, substituted or unsubstituted phenylthio, substi-

tuted or unsubstituted $C_1$-$C_6$-alkylsulfonyl or phenylsulfonyl, and

K is the radical of a coupling component of the pyridine, pyridone or pyrazole series.

2. A thien-3-ylazo dye as claimed in claim 1, wherein

X is cyano, nitro, $C_1$-$C_2$-alkanoyl, benzoyl or the radical $COOR^1$ where $R^1$ is as defined in claim 1,

Y is hydrogen, cyano, $C_1$-$C_4$-alkanoyl, phenyl or the radical $COOR^1$ where $R^1$ is as defined in claim 1,

Z is $C_1$-$C_4$-alkyl, benzyl, phenyl, $C_1$-$C_4$-alkylthio, phenylthio or $C_1$-$C_4$-alkylsulfonyl which may each be substituted by cyano, $C_1$-$C_4$-alkoxycarbonyl, methoxy, chlorine or bromine, or phenylsulfonyl, and

K is the radical of a coupling component of the 2,6-diaminopyridine, 6-hydroxypyrid-2-one or 5-aminopyrazole series.

3. A thien-3-ylazo dye as claimed in claim 1, wherein

X is cyano, $C_1$-$C_4$-alkanoyl or the radical $COOR^1$ where $R^1$ is $C_1$-$C_4$-alkyl or phenyl,

Y is hydrogen, cyano, $C_1$-$C_4$-alkanoyl, phenyl or the radical $COOR^1$ where $R^1$ is $C_1$-$C_4$-alkyl or phenyl,

Z is $C_1$-$C_4$-alkyl, $C_1$-$C_4$-alkylthio or $C_1$-$C_4$-alkylsulfonyl, which may each be substituted by cyano, $C_1$-$C_4$-alkoxycarbonyl, methoxy, chlorine or bromine, or is benzyl, phenyl, phenylthio or phenylsulfonyl, and

K is the radical of a coupling component of the 2,6-diaminopyridine, 6-hydroxypyrid-2-one or 5-aminopyrazole series.

4. Use of a thien-3-ylazo dye as claimed in claim 1 for dyeing synthetic fiber materials.

## Revendications

1. Colorants thiényl-3-azoïques de formule I

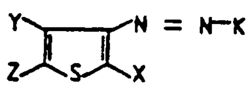

(I).

dans laquelle

X représente un reste cyano, nitro, alcanoyle en $C_1$-$C_6$, benzoyle éventuellement substitué, phényle éventuellement substitué ou le reste $COOR^1$ ou $CONR^1R^2$, $R^1$ et $R^2$ étant identiques ou différents et étant mis chacun, indépendamment l'un de l'autre, pour un reste alkyle en $C_1$-$C_8$ éventuellement substitué, cycloalkyle en $C_5$-$C_7$, alcényle en $C_3$-$C_4$, phényle éventuellement substitué, ou formant ensemble, avec l'atome d'azote qui les lie, un reste hétérocyclique saturé penta- ou hexagonal, et $R^2$ pouvant en plus avoir la signification d'un atome d'hydrogène,

Y représente un atome d'hydrogène, un reste cyano, alcanoyle en $C_1$-$C_6$, benzoyle éventuellement substitué, alkylsulfonyle en $C_1$-$C_4$, phénylsulfonyle éventuellement substitué, phényle éventuellement substitué ou le reste $COOR^1$ ou $CONR^1R^2$, $R^1$ et $R^2$ ayant chacun la signification sus-indiquée,

Z représente un atome d'hydrogène, un reste alkyle en $C_1$-$C_8$ éventuellement substitué, phényle éventuellement substitué, alkylthio en $C_1$-$C_6$ éventuellement substitué, phénylthio éventuellement substitué, alkylsulfonyle en $C_1$-$C_6$ éventuellement substitué ou phénylsulfonyle, et

K représente le reste d'un composant de copulation de la série des pyridines, des pyridones ou des pyrazoles.

2. Colorants thiényl-3-azoïques selon la revendication 1, caractérisés en ce que

X représente un reste cyano, nitro, alcanoyle en $C_1$-$C_4$, benzoyle ou le reste $COOR^1$, où $R^1$ a la signification donnée dans la revendication 1,

Y représente un atome d'hydrogène, un reste cyano, alcanoyle en $C_1$-$C_4$, phényle ou le reste $COOR^1$, où $R^1$ a la signification donnée dans la revendication 1,

Z représente un reste alkyle en $C_1$-$C_4$, benzyle, phényle, alkylthio en $C_1$-$C_4$, phénylthio ou alkylsulfonyle en $C_1$-$C_4$, dont chacun est éventuellement substitué par un groupement cyano, (alcoxy en $C_1$-$C_4$)carbonyle, méthoxy ou par un atome de chlore ou de brome, ou un reste phénylsulfonyle, et

K représente le reste d'un composant de copulation de la série de la 2,6-diaminopyridine, de la 6-hydroxypyridone-2 ou du 5-aminopyrazole.

**3.** Colorants thiényl-3-azoïques selon la revendication 1, caractérisés en ce que

X représente un reste cyano, alcanoyle en $C_1$-$C_4$ ou le reste $COOR^1$, où $R^1$ est mis pour un reste alkyle en $C_1$-$C_4$ ou phényle,

Y représente un atome d'hydrogène, un reste cyano, alcanoyle en $C_1$-$C_4$, phényle ou le reste $COOR^1$, où $R^1$ est mis pour un reste alkyle en $C_1$-$C_4$ ou phényle,

Z représente un reste alkyle en $C_1$-$C_4$, alkylthio en $C_1$-$C_4$ ou alkylsulfonyle en $C_1$-$C_4$, dont chacun est éventuellement substitué par un groupement cyano, (alcoxy en $C_1$-$C_4$)carbonyle, méthoxy ou par un atome de chlore ou de brome, ou un reste benzyle, phényle, phénylthio ou phénylsulfonyle, et

K représente le reste d'un composant de copulation de la série de la 2,6-diaminopyridine, de la 6-hydroxypyridone-2 ou du 5-aminopyrazole.

**4.** Utilisation des colorants thiényl-3-azoïques selon la revendication 1 pour la teinture de matières en fibres synthétiques.